# EUROPEAN PATENT SPECIFICATION

(11) **EP 2 810 499 B1**
(45) Date of publication and mention of the grant of the patent: **19.07.2017**
(21) Application number: 13706317.8
(22) Date of filing: 30.01.2013
(51) Int. Cl.: H04W 56/00

(54) **USER EQUIPMENT, RADIO BASE STATION AND METHODS FOR CONTROLLING A TIME ALIGNMENT TIMER**
BENUTZERVORRICHTUNG, FUNKBASISSTATION UND VERFAHREN ZUR STEUERUNG EINES ZEITSYNCHRONISIERUNGSZEITGEBERS
ÉQUIPEMENT UTILISATEUR, STATION DE BASE RADIO ET PROCÉDÉS POUR LA COMMANDE D'UN TEMPORISATEUR DE SYNCHRONISATION

(30) Priority: 30.01.2012 US 201261592055 P
(43) Date of publication of application: 10.12.2014
(73) Proprietor: Telefonaktiebolaget LM Ericsson (publ), 164 83 Stockholm (SE)
(72) Inventor: BERGSTRÖM, Mattias, SE-120 71 Stockholm (SE); WITTBERG, Mikael, SE-753 19 Uppsala (SE)
(74) Representative: Ericsson
(86) International application number: PCT/SE2013/050074
(87) International publication number: WO 2013/115715

(56) References cited:
- WO-A1-2012/165821
- HTC: "The prioritization of RACH", 3GPP DRAFT; R2-115148 THE PRIORITIZATION OF RACH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 30 September 2011 (2011-09-30), XP050540575, [retrieved on 2011-09-30]
- RENESAS MOBILE EUROPE LTD: "Open issues for RACH procedure", 3GPP DRAFT; R2-115147 OPEN ISSUES FOR RACH PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 3 October 2011 (2011-10-03), XP050540815, [retrieved on 2011-10-03]
- POTEVIO: "UE Behaviour on Multi-RA Procedures", 3GPP DRAFT; R2-114977 UE BEHAVIOUR ON MULTI-RA PROCEDURES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 2 October 2011 (2011-10-02), XP050540654, [retrieved on 2011-10-02]
- POTEVIO: "Maintenance of Time Alignment Timer in Case of Multi-TA", 3GPP DRAFT; R2-114145 MAINTENANCE OF TIME ALIGNMENT TIMER IN CASE OF MULTI-TA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20110822, 15 August 2011 (2011-08-15), XP050539713, [retrieved on 2011-08-15]
- INTEL CORPORATION: "On open Issues on Multiple Timing Advance in Rel-11 CA", 3GPP DRAFT; R2-114249 CA MTA OPENS ISSUES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20110822, 16 August 2011 (2011-08-16), XP050540014, [retrieved on 2011-08-16]

## Description

### TECHNICAL FIELD

The present invention relates to a user equipment, a radio base station and methods therein. In particular, embodiments herein relate to control a Time Alignment, TA, timer.

### BACKGROUND

In today's radio communications networks or Telecommunications system a number of different technologies are used, such as Long Term Evolution (LTE), LTE-Advanced, Wideband Code Division Multiple Access (WCDMA), Global System for Mobile communications/Enhanced Data rate for GSM Evolution (GSM/EDGE), Worldwide Interoperability for Microwave Access (WiMax), or Ultra Mobile Broadband (UMB), just to mention a few possible technologies for radio communication. A radio communications network comprises radio base stations providing radio coverage over at least one respective geographical area forming a cell. The cell definition may also incorporate frequency bands used for transmissions, which means that two different cells may cover the same geographical area but using different frequency bands. User equipments (UE), also referred to as terminals, are served in the cells by the respective radio base station and are communicating with respective radio base station. The user equipments transmit data over a radio interface to the radio base stations in uplink (UL) transmissions and the radio base stations transmit data over a radio interface to the user equipments in downlink (DL) transmissions.

LTE is a project within the 3rd Generation Partnership Project (3GPP) to evolve the WCDMA standard towards the fourth generation (4G) of mobile telecommunication networks. In comparisons with third generation (3G) WCDMA, LTE provides increased capacity, much higher data peak rates and significantly improved latency. For example, the LTE specifications support downlink data peak rates up to 300 Mbps, uplink data peak rates of up to 75 Mbit/s and radio access network round-trip times of less than 10 ms. In addition, LTE supports scalable carrier bandwidths from 20 MHz down to 1.4 MHz and supports both Frequency Division Duplex (FDD) and Time Division Duplex (TDD) operation.

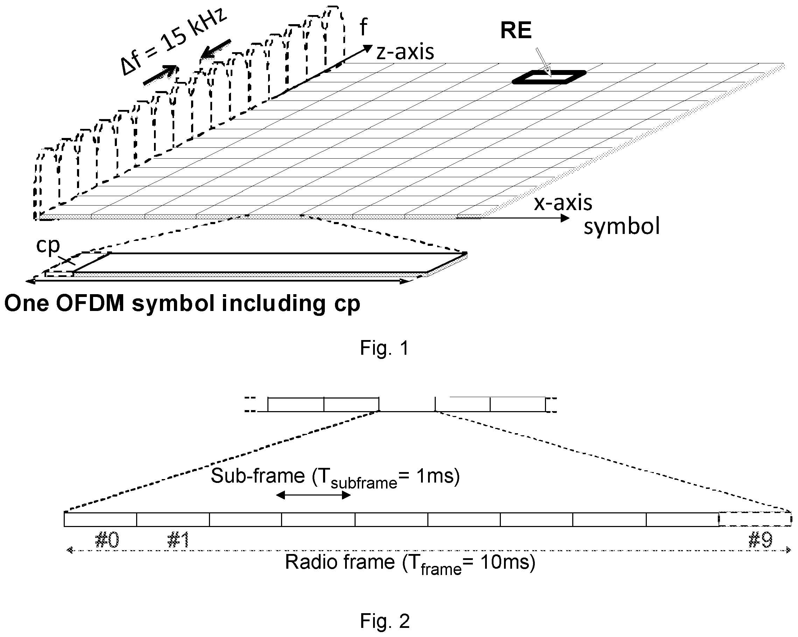

LTE is a Frequency Division Multiplexing technology wherein Orthogonal Frequency Division Multiplexing (OFDM) is used in a DL transmission from a radio base station to a user equipment. Single Carrier - Frequency Domain Multiple Access (SC-FDMA) is used in an UL transmission from the user equipment to the radio base station. Services in LTE are supported in the packet switched domain. The SC-FDMA used in the UL is also referred to as Discrete Fourier Transform Spread (DFTS) - OFDM. Hence, LTE uses OFDM in the downlink and DFT-spread OFDM in the uplink. The basic LTE downlink physical resource can thus be seen as a time-frequency grid as illustrated in **Figure 1**, where each Resource Element (RE) corresponds to one OFDM subcarrier during one OFDM symbol interval. A symbol interval comprises a cyclic prefix (cp), which cp is a prefixing of a symbol with a repetition of the end of the symbol to act as a guard band between symbols and/or facilitate frequency domain processing. Frequencies f or subcarriers having a subcarrier spacing Δf are defined along an z-axis and symbols are defined along an x-axis.

In the time domain, LTE downlink transmissions are organized into radio frames of 10 ms, each radio frame comprising ten equally-sized subframes, #0 - #9, each with a Tsubframe= 1 ms of length in time as shown in **Figure 2****.** Furthermore, the resource allocation in LTE is typically described in terms of Resource Blocks (RB), where a resource block corresponds to one slot of 0.5 ms in the time domain and 12 contiguous subcarriers in the frequency domain. Resource blocks are numbered in the frequency domain, starting with resource block 0 from one end of the system bandwidth.

The notion of virtual resource blocks (VRB) and physical resource blocks (PRB) has been introduced in LTE. The actual resource allocation to a user equipment is made in terms of VRB pairs. There are two types of resource allocations, localized and distributed. In the localized resource allocation, a VRB pair is directly mapped to a PRB pair, hence two consecutive and localized VRB are also placed as consecutive PRBs in the frequency domain. On the other hand, the distributed VRBs are not mapped to consecutive PRBs in the frequency domain; thereby providing frequency diversity for data channel transmitted using these distributed VRBs.

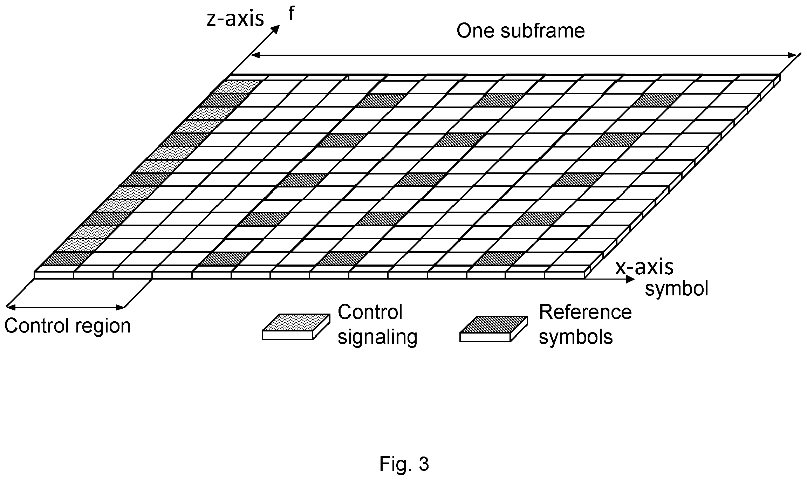

Downlink and uplink transmissions are dynamically scheduled, i.e. in each subframe the radio base station transmits control information stating to which user equipment data is transmitted and upon which resource blocks the data is transmitted, in current downlink subframe. The control information for a given user equipment is transmitted using one or multiple Physical Downlink Control Channels (PDCCH). This control signaling is typically transmitted in a control region comprising the first n=1, 2, 3 or 4 OFDM symbols in each subframe where n is the Control Format Indicator (CFI). The downlink subframe also comprises common reference symbols (CRS), which are known to the receiver and used for coherent demodulation of e.g. the control information. A downlink system with 3 OFDM symbols allocated for control signaling, for example the PDCCH, is illustrated in **Figure 3** and denoted as control region. The resource elements used for control signaling are indicated with wave-formed lines and resource elements used for reference symbols are indicated with diagonal lines. Frequencies f or subcarriers are defined along an z-axis and symbols are defined along an x-axis.

### Carrier Aggregation

The LTE Release 10 (Rel-10) specifications have recently been standardized, supporting *Component Carrier* (CC) bandwidths up to 20 MHz, which is the maximal LTE Rel-8 carrier bandwidth. Hence, an LTE Rel-10 operation wider than 20 MHz is possible and appear as a number of LTE carriers to an LTE Rel-10 user equipment.

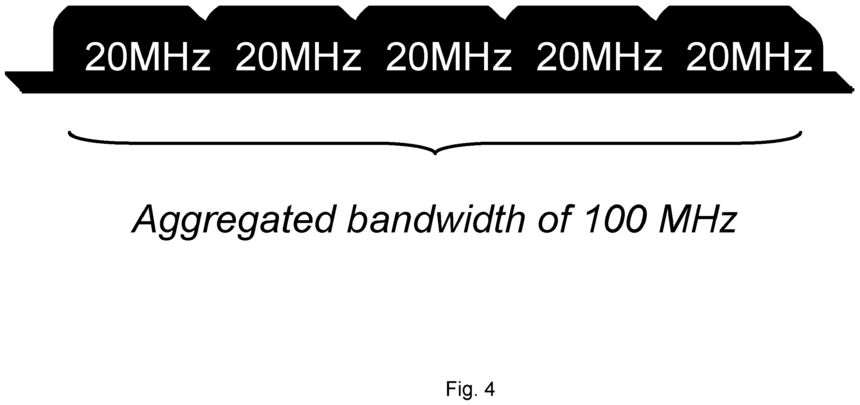

In particular for early LTE Rel-10 deployments it can be expected that there will be a smaller number of LTE Rel-10-capable user equipments compared to many LTE legacy user equipments. Therefore, it is necessary to assure an efficient use of a wide carrier also for legacy user equipments, i.e. that it is possible to implement carriers where legacy user equipments can be scheduled in all parts of the wideband LTE Rel-10 carrier. The straightforward way to obtain this would be by means of *Carrier Aggregation* (CA). CA implies that an LTE Rel-10 user equipment can receive multiple CC, where the CC have, or at least the possibility to have, the same structure as a Rel-8 carrier. CA is illustrated in **Figure 4****.**

The Rel-10 standard support up to 5 aggregated carriers where each carrier is limited in the RF specifications to have a one of six bandwidths namely 6, 15, 25, 50, 75 or 100 RB, corresponding to 1.4, 3, 5, 10, 15 and 20 MHz respectively. The number of aggregated CC as well as the bandwidth of the individual CC may be different for uplink and downlink. A symmetric configuration refers to the case where the number of CCs in downlink and uplink is the same whereas an asymmetric configuration refers to the case that the number of CCs is different. It is important to note that the number of CCs configured in the network may be different from the number of CCs seen by a user equipment: A user equipment may for example support more downlink CCs than uplink CCs, even though the network offers the same number of uplink and downlink CCs.

During initial access a LTE Rel-10 user equipment behaves similarly to a LTE Rel-8 user equipment. Upon successful connection to the network a user equipment may - depending on its own capabilities and the network - be configured with additional CCs in the UL and DL. Configuration is based on Radio Resource Control (RRC). Due to the heavy signaling and rather slow speed of RRC signaling it is envisioned that a user equipment may be configured with multiple CCs even though not all of them are currently used. If a user equipment is activated on multiple CCs this would imply it has to monitor all DL CCs for PDCCH and Physical Downlink Shared Channel (PDSCH). This implies a wider receiver bandwidth, higher sampling rates, etc. resulting in high power consumption.

### Component carrier types

Initially, the user equipment will be configured with one UL/DL pair of component carriers, on which the user equipment made the initial random access. These component carriers are together called the Primary Cell (PCell).

The UL PCell is configured with Physical Uplink Control Channel (PUCCH) and used for transmission of Layer 1 (L1) uplink control information such as Channel State Information (CSI). This also includes CSI for the DL transmission on the PCell as well as on the activated Secondary Cells (SCell).

In addition to the PCell, the base station may configure the user equipment with additional serving cells, so called SCells as extra resource when needed. The user equipment may be configured with one or more, up to four SCells.

### Timing alignment

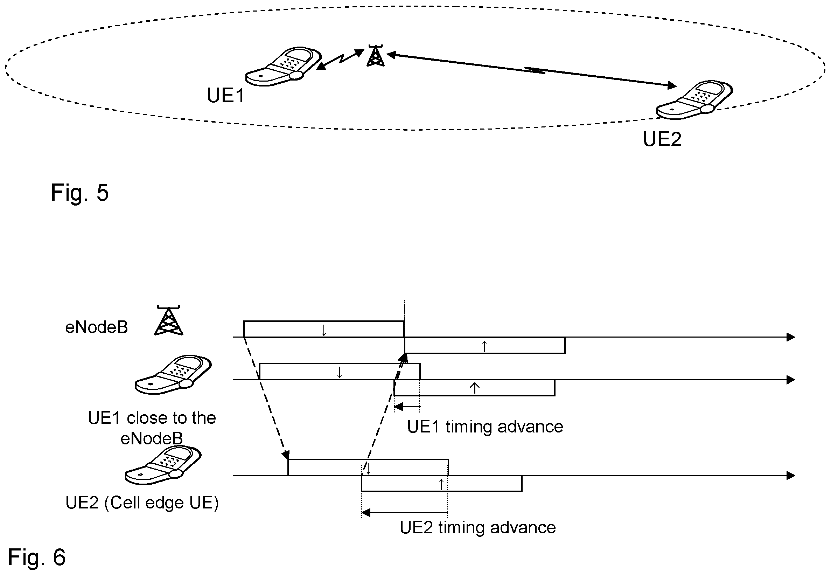

In order to preserve the orthogonality in UL the UL transmissions from multiple user equipments need to be time aligned at the radio base station, called eNodeB in an LTE scenario. Since user equipments may be located at different distances from the eNodeB (see **Figure 5**), the propagation delay for different user equipments will be different and hence different user equipments will need to initiate their UL transmissions at different times. A user equipment far from the eNodeB needs to start transmission earlier than a user equipment close to the eNodeB. This can for example be handled by timing advance (TA) of the UL transmissions; a user equipment starts its UL transmission before a nominal time given by the timing of the DL signal received by the user equipment. This concept is illustrated in **Figure 6**.

The UL timing advance is maintained by the eNodeB through timing alignment commands, also referred to as timing advance commands, to the user equipment based on measurements on UL transmissions from that user equipment.

Through timing alignment commands, the user equipment is ordered to start its UL transmissions earlier or later. This applies to all UL transmissions except for random access preamble transmissions on physical random access channel (PRACH), i.e. including transmissions on Physical uplink shared channel (PUSCH), Physical Uplink Control Channel (PUCCH), and Sounding Reference Signal (SRS).

There is a strict relation between DL transmissions and the corresponding UL transmission. Examples of this are
- the timing between a Downlink Shared Channel (DL-SCH) transmission on PDSCH is related to the Hybrid Automatic Repeat Request(HARQ) Acknowledgments/Non-acknowledgements (ACK/NACK) feedback transmitted in UL, either on PUCCH or PUSCH;
- the timing between an UL grant transmission on PDCCH is related to the Uplink Shared Channel (UL-SCH) transmission on PUSCH.

By increasing the timing advance value for a user equipment, the user equipment processing time between the DL transmission and the corresponding UL transmission decreases. For this reason, an upper limit on the maximum timing advance has been defined by 3GPP in order to set a lower limit on the processing time available for a user equipment. For LTE, this value has been set to roughly 667µs which corresponds to a cell range of 100km, note that the TA value compensates for the round trip delay.

The timing advance command leads to the desired Time Alignment as long as the propagation delay between the user equipment and the eNodeB does not change. Obviously, this cannot be guaranteed in a mobile communication system: The propagation conditions change as the user equipment moves, and the uplink timing must therefore be updated when a time-drift occurs. Without such adjustments, the signal could leak over to other frames or subframes used e.g. by other user equipments, resulting in excessive interference between the user equipments.

Therefore, the eNodeB must re-evaluate repeatedly if the received signal is still synchronized and send timing adjustments regularly. To prevent user equipments from sending data while not being synchronized, the eNodeB configures a Time Alignment timer (TA timer) in the user equipment. The user equipment starts or restarts the TA timer upon reception of the timing advance command. While the TA timer is running, the user equipment may assume that its uplink is still synchronized with the eNodeB and it may perform uplink transmissions. When the TA timer expires the user equipment assumes that the uplink synchronization is lost. In this case the user equipment must perform a Random Access Procedure in order to obtain synchronization prior to any data transmission. During the procedure the eNodeB determines the suitable initial TA value based on the random access preamble sent by the user equipment.

In LTE Rel-10 there is only a single timing advance value per user equipment and all UL cells are assumed to have the same transmission timing. The reference point for the timing advance is the receive timing of the primary DL cell.

In LTE Rel-11 different serving cells used by the same user equipment may have different timing advance. Most likely the serving cells sharing the same TA value, for example depending on the deployment, will be configured by the network to belong to a so called TA group. If at least one serving cell of the TA group is time aligned, all serving cells belonging to the same group may use this TA value. Each TA group has an associated TA timer and the cells in a TA group are considered uplink time aligned if the associated TA timer is running. To obtain Time Alignment for an Scell belonging to a different TA group than the PCell, the current 3GPP assumption is that network initiated random access may be used to obtain initial TA for this SCell, and for the TA group the SCell belongs to. Thus, the user equipment has more than one serving cell in downlink and/or in the uplink: one primary serving cell and one or more secondary serving cells operating on the Primary component carrier (PCC) and Secondary component carrier (SCC) respectively. The serving cell is interchangeably called primary cell (PCell) or primary serving cell (PSC). Similarly the secondary serving cell is interchangeably called secondary cell (SCell) or secondary serving cell (SSC). Regardless of the terminology, the PCell and SCell(s) enable the user equipment to receive and/or transmit data. More specifically the PCell and SCell exist in DL and UL for the reception and transmission of data by the user equipment. The remaining non-serving cells on the PCC and SCC are called neighbour cells.

### Random access

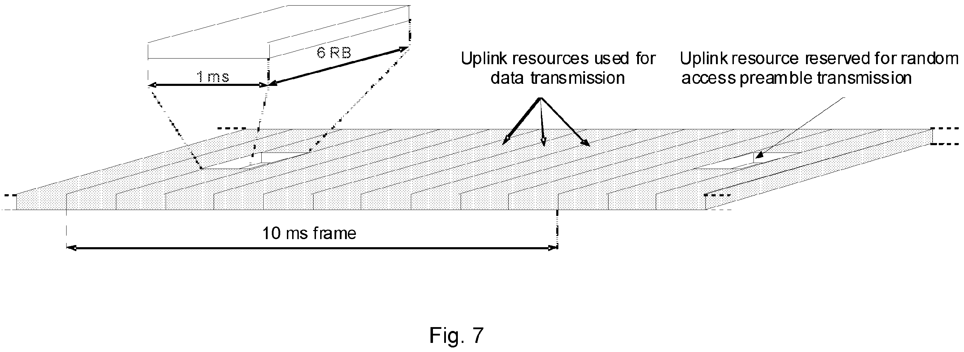

In LTE, as in any communication system, a user equipment may need to contact the network, via the eNodeB, without having a dedicated resource in the Uplink, from user equipment to base station. To handle this, a random access procedure is available where a user equipment that does not have a dedicated UL resource may transmit a signal to the radio base station. The first message of this procedure is typically transmitted on a special resource reserved for random access, a PRACH. This channel can for instance be limited in time and/or frequency, as in LTE. See **Figure 7**. Uplink resource reserved for random access preamble transmission are illustrated as 6 RBs over 1 ms, while the other UL resources are used for data transmission. The resources, available for PRACH transmission is provided to the user equipments as part of the broadcasted system information, or as part of dedicated RRC signaling in case of e.g. handover.

In LTE, the random access procedure can be used for a number of different reasons. Among these reasons are
- Initial access, for user equipments in the LTE_IDLE state or LTE_DETACHED state
- Incoming handover
- Resynchronization of the UL
- Scheduling request, for a user equipment that is not allocated any other resource for contacting the base station
- Positioning

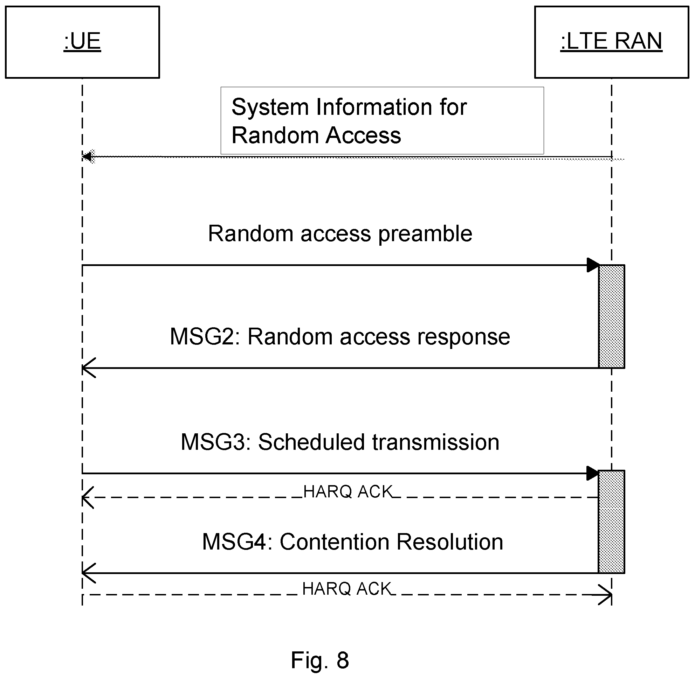

The contention-based random access procedure used in LTE is illustrated in **Figure 8**. The user equipment starts the random access procedure by randomly selecting one of the preambles available for contention-based random access. The user equipment then transmits the selected random access preamble on the PRACH to eNodeB in RAN.

The Radio Access Network (RAN), i.e. the eNodeB, acknowledges any preamble it detects by transmitting a random access response (MSG2) including an initial grant to be used on the uplink shared channel, a temporary Cell-Radio Network Temporary Identifier (C-RNTI), and a Time Alignment (TA) update based on the timing offset of the preamble measured by the eNodeB on the PRACH. The MSG2 is transmitted in the DL to the user equipment and its corresponding PDCCH message Cyclic redundancy check (CRC) is scrambled with the Random Access - Radio Network Temporary Identifier (RA-RNTI).

When receiving the response the user equipment uses the grant to transmit a message (MSG3) that in part is used to trigger the establishment of radio resource control and in part to uniquely identify the user equipment on the common channels of the cell. The timing advance command provided in the random access response is applied in the UL transmission in MSG3. The eNB can change the resources blocks that are assigned for a MSG3 transmission by sending an UL grant the CRC of which is scrambled with the Temporary Cell - Radio Network Temporary Identifier (TC-RNTI).

The MSG4 which is then contention resolution has its PDCCH CRC scrambled with the C-RNTI if the user equipment previously has a C-RNTI assigned. If the user equipment does not have a C-RNTI previously assigned its PDCCH CRC is scrambled with the TC-RNTI.

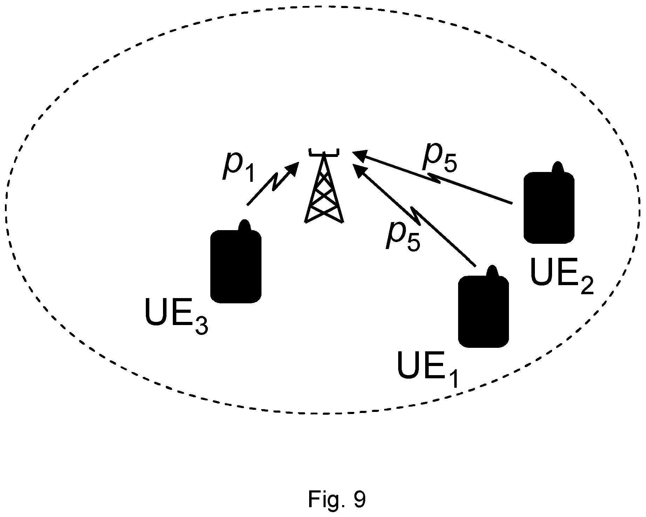

The procedure ends with RAN solving any preamble contention that may have occurred for the case that multiple user equipments transmitted the same preamble at the same time. This can occur since each user equipment randomly selects when to transmit and which preamble to use. If multiple user equipments select the same preamble for the transmission on RACH, there will be contention between these user equipments that needs to be resolved through the contention resolution message (MSG4). The case when contention occurs is illustrated in **Figure 9**, where two user equipments, UE₁ and UE₂, transmit the same preamble, *p*₅, at the same time. A third user equipment, UE₃, also transmits at the same RACH, but since it transmits with a different preamble, *p*₁, there is no contention between this user equipment UE₃ and the other two user equipments, UE₁ and UE₂.

The user equipment can also perform non-contention based random access. A non-contention based random access or contention free random access can e.g. be initiated by the eNB to get the user equipment to achieve synchronisation in UL. The eNB initiates a non-contention based random access either by sending a PDCCH order or indicating it in an RRC message. The later of the two is used in case of handover.

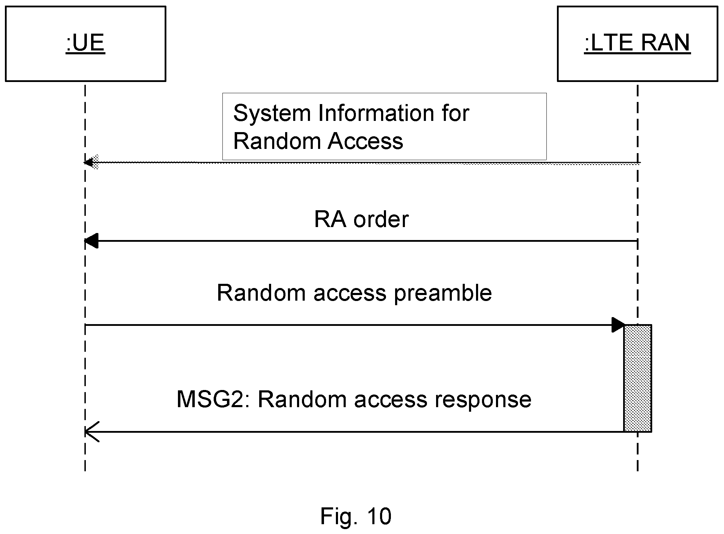

The eNB can also order the user equipment through a PDCCH message to perform a contention based random access; the procedure for this is illustrated in Figure 9. The procedure for the user equipment to perform contention free random access is illustrated in **Figure 10**. Similar to the contention based random access the MSG2 is transmitted in the DL to the user equipment and its corresponding PDCCH message CRC is scrambled with the RA-RNTI. The user equipment considers the contention resolution successfully completed after it has received MSG2 successfully.

For the contention free random access as for the contention based random access, the MSG2 comprises a timing alignment value also referred to as a timing advance value. This enables the eNB to set the initial/updated timing according to the user equipment's transmitted preamble.

In LTE in Rel-10 the random access procedure is limited to the primary cell only. This implies that the user equipment can only send a preamble on the primary cell. Further MSG2 and MSG3 is only received and transmitted on the primary cell. MSG4 can however in Rel-10 be transmitted on any DL cell.

In LTE Rel-11, the current assumption is that the random access procedure will be supported also on secondary cells, at least for the user equipments supporting Rel-11 carrier aggregation. So far only network initiated random access on SCells is assumed. Supporting cells of different TA values may reduce the performance of the network when e.g. one cell is out of sync.

Document HTC: "The prioritization of RACH", 3GPP DRAFT; R2-115148 THE PRIORITIZATION OF RACH, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX; FRANCE,vol. RAN WG2, no. Zhuhai; 20111010, 30 September 2011 (2011-09-30), XP050540575, [retrieved on 2011-09-30*]* discloses a case where a TA command is received in a random access procedure. The TAC MAC CE is a relative TA command that updates an existing TA and is only sent outside a RA procedure.

### SUMMARY

It is therefore an object of embodiments herein to improve performance of the radio network when supporting cells of different time alignment timers.

According to a first aspect the object is achieved by a method in a user equipment for controlling a Time Alignment, TA, timer associated with at least one secondary cell, SCell, wherein the user equipment is configured with a primary cell, PCell, and with the at least one SCell. The user equipment prevents the TA timer associated with the at least one SCell from starting if a TA timer associated with the PCell is not running.

According to a second aspect the object is achieved by a user equipment adapted for controlling a TA timer associated with at least one SCell. The user equipment is adapted to be configured with a PCell and the at least one SCell. The user equipment comprises a processor configured to prevent the TA timer associated with the at least one SCell from starting if a TA timer associated with the PCell is not running.

According to a third aspect the object is achieved by a method in a radio base station for controlling a TA timer associated with at least one SCell. A user equipment is being served by the radio base station and is configured with a PCell, and the at least one SCell. The radio base station prevents the TA timer associated with the at least one SCell from starting if a TA timer associated with the PCell is not running.

According to a fourth aspect the object is achieved by a radio base station adapted for controlling a TA timer associated with at least one SCell. A user equipment, being served by the radio base station, is configured with a PCell and the at least one SCell. The radio base station comprises a processor configured to prevent a TA timer associated with the at least one SCell from starting if a TA timer associated with the PCell is not running.

Hence, the TA timer associated with the SCell is prevented from starting if the TA timer associated with the PCell is not running. Thus, to avoid a state where a TA timer associated with the SCell is running while the TA timer associated with the PCell is not running, embodiments herein provide that when the PCell TA timer is not running the user equipment and/or the radio base station prevents the start of the TA timer of the Scell e.g. by aborting all on-going random access procedures on SCells or not transmitting UL data on the SCell.

According to embodiments herein the user equipment will not reach the state where the TA timer associated with the SCell is running while the TA timer associated with the PCell is not running. By avoiding this state, the user equipment knows that when the TA timer associated with the SCell is running this also means that the TA timer associated with the PCell is running, and therefore no special additional state is needed in the user equipment, or in the radio base station, to distinguish between the two cases when the TA timer associated with the PCell is running, and not running, when the TA timer associated with the SCell is running.

With embodiments herein, the scheduling of the SCell can be done in downlink by the radio base station without problems because the HARQ acknowledgements can be sent on the PUCCH channel on the PCell, since the PCell is known to be in sync.

Moreover, the workload of both the radio base station and the user equipment will be reduced if the TA timers associated with the SCell are prevented from starting according to embodiments herein.

Other objects, advantages and novel features of embodiments herein will become apparent from the following detailed description when considered in conjunction with the accompanying drawings and claims.

### BRIEF DESCRIPTION OF THE DRAWINGS

Embodiments will now be described in more detail in relation to the enclosed drawings, in which:
- Figure 1: The LTE down link physical resource.
- Figure 2: LTE time-domain structure.
- Figure 3: Downlink subframe.
- Figure 4: Carrier Aggregation.
- Figure 5: Illustration of cell with two UEs at different distance from the eNodeB.
- Figure 6: Timing advance of UL transmissions depending on distance to eNodeB.
- Figure 7: Principal illustration of random-access-preamble transmission.
- Figure 8: Signaling over the air interface for the contention-based random access procedure in LTE.
- Figure 9: Illustration of contention based random access, where there is contention between two UEs.
- Figure 10: Signaling over the air interface for the contention-free random access procedure in LTE.
- Figure 11: A schematic overview of a Telecommunications system.
- Figure 12: Event-flow wherein stated problem occurs.
- Figure 13: Event-flow wherein a first embodiment is applied.
- Figure 14: Event-flow wherein a second embodiment is applied.
- Figure 15: Schematic flow chart of a method in a user equipment according to embodiments herein.
- Figure 16: Schematic illustration of a user equipment according to embodiments herein.
- Figure 17: Schematic flow chart of a method in a radio base station according to embodiments herein.
- Figure 18: A block diagram depicting a radio base station according to embodiments herein.

### DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits, and methods are omitted so as not to obscure the description of the invention with unnecessary details.

Reference throughout the specification to "one embodiment" or "an embodiment" means that a particular feature, structure, or characteristic described in connection with an embodiment is included in at least one embodiment of the present invention. Thus, the appearance of the phrases "in one embodiment" or "in an embodiment" in various places throughout the specification are not necessarily all referring to the same embodiment. Further, the particular features, structures or characteristics may be combined in any suitable manner in one or more embodiments.

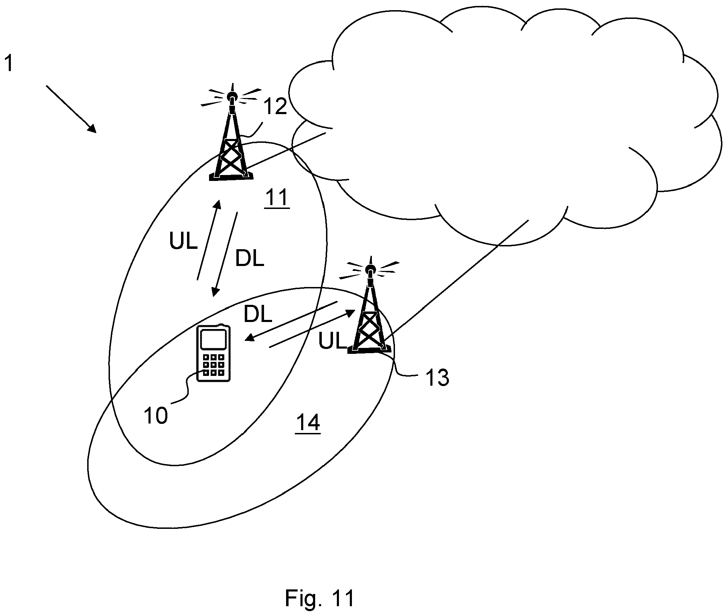

**Figure 11** shows a schematic overview depicting **a Telecommunications system 1.** The Telecommunications system 1 comprises one or more RANs and one or more CNs. The Telecommunications system 1 may use a number of different technologies, such as LTE, LTE-Advanced, WCDMA, GSM/EDGE, WiMax, or UMB, just to mention a few possible implementations.

In the Telecommunications system 1, **a user equipment 10**, also known as a mobile station and/or a wireless terminal, communicates via a Radio Access Network (RAN) to one or more core networks (CN). It should be understood by the skilled in the art that "user equipment" is a non-limiting term which means any wireless terminal, Machine Type Communication (MTC) device or node e.g. Personal Digital Assistant (PDA), laptop, mobile, sensor, relay, mobile tablet or even a small base station communicating within respective cell.

The Telecommunications system 1 covers a geographical area which is divided into cell areas, e.g. **a first cell 11**, being served by **a radio base station 12.** The first cell 11 may be a Primary cell, PCell, configured for the user equipment 10. The radio base station 12 may also be referred to as a first radio base station. The radio base station 12 may be referred to as e.g. a NodeB, an evolved Node B (eNB, eNodeB), a base transceiver station, Access Point Base Station, base station router, or any other network unit capable of communicating with a user equipment within the cell served by the radio base station 12 depending e.g. on the radio access technology and terminology used. The radio base station 12 may serve one or more cells. A cell is a geographical area where radio coverage is provided by radio base station equipment at a base station site. The cell definition may also incorporate frequency bands and radio access technology used for transmissions, which means that two different cells may cover the same geographical area but using different frequency bands. Each cell is identified by an identity within a local radio area, which is broadcast in the cell. Another identity identifying the first cell 11 uniquely in the whole Telecommunications system 1 is also broadcasted in the first cell 11. The radio base station 12 communicates over the air or radio interface operating on radio frequencies with the user equipment 10 within range of the radio base station 12. The user equipment 10 transmits data over the radio interface to the radio base station 12 in Uplink (UL) transmissions and the radio base station 12 transmits data over an air or radio interface to the user equipment 10 in Downlink (DL) transmissions.

Another, a different, or second, **radio base station 13** is also comprised in the Telecommunications system 1. The second radio base station 13 provides radio coverage over **a second cell 14**, another or a different cell, e.g. a cell overlapping or neighboring to the cell 11. The second cell may be a Secondary Cell, SCell, configured for the user equipment 10. It should be noted that the second cell 14 may also be served by the first radio base station 12, i.e. the first and second cell may be served by the same radio base station. Note also that, one base station may have Remove Radio Heads/Remote Radio Units which are kind of like an antenna placed away from the radio base station. So it may be one radio base station offering multiple cells from multiple nodes.

An interface between a core network node and the respective radio base station 12, 13 is an S1 interface, and an interface between the radio base station 12 and the second radio base station 13 is an X2 interface.

In some versions of the Telecommunications system 1, several base stations are typically connected, e.g. by landlines or microwave, to a controller node (not shown), such as a Radio network Controller (RNC) or a Base Station Controller (BSC), which supervises and coordinates various activities of the plural base stations connected thereto. The RNCs are typically connected to one or more core networks.

Embodiments herein are described within the context of E-UTRAN, also referred to as LTE. It should be understood that the problems and solutions described herein are equally applicable to wireless access networks and user equipments implementing other access technologies and standards. LTE is used as an example technology where the embodiments described herein are suitable, and using LTE in the description therefore is particularly useful for understanding the problem and solutions solving the problem and the use of LTE terminology should not be seen as limiting to this particular technology.

Embodiments herein relate to timing alignment in primary and secondary cells in a carrier aggregation scenario. Thus, the user equipment 10 has more than one serving cell in downlink and/or in the uplink: one PCell, the first cell 11, and one or more SCells, the second cell 14. In LTE Rel-11 the concept of Timing advance groups (TA groups) has been introduced where a set of serving cells configured for a user equipment is grouped together. The serving cells, comprising the first cell 11, in a TA group shares timing reference and TA value and therefore they share uplink timing. Each TA group has an associated TA timer which tells the user equipment 10 whether the serving cells in the TA group should be considered uplink time aligned or not, i.e. synchronised or out of synchronisation. A TA timer for the PCell or a TA group comprising the Pcell is denoted herein as PCell TA timer or TA timer associated with the PCell. The serving cells in a TA group are considered uplink time aligned as long as the associated TA timer is running.

As stated above, the user equipment 10 is further served by the second cell 14, the SCell. The user equipment 10 is configured with a different TA value for the SCell which may be associated with a different TA group. A TA timer for the SCell or a TA group comprising the SCell is denoted herein as SCell TA timer or TA timer associated with the SCell. It should be noted that the TA group associated with the PCell may comprise SCells as well.

Upon expiry of the PCell TA timer the following actions is triggered:
- the user equipment 10 flushes all HARQ buffers,
- clears any configured assignment/grants,
- the TA timers for all TA groups should be considered expired.
- the PUCCH/SRS configurations should be released for all configured serving cells.

User equipments are allowed to perform random access on SCells to achieve uplink Time Alignment. A message sent from the radio base station 12 or the second radio base station 13 to the user equipment 10 during the random access procedure comprises a Time Alignment command or a timing advance command (TAC). Upon completion of a random access procedure the user equipment 10 uses the TAC to update the TA value associated with the TA group which the serving cell, e.g. the first cell 11 or the second cell 14, that performed the random access procedure belongs to. When the TA value is updated the associated TA timer is restarted from its initial value. A problem has been identified that even though PCell TA Timer expiry triggers SCell TA Timer expiry, it does not prevent that the SCell TA Timer is started and RA completion will trigger SCell TA Timer restart regardless of TA Timer state of the PCell. The user equipment 10, according to some embodiments herein, prevents the TA timer associated with the at least one SCell, e.g. second cell 14, from starting if the TA timer associated with the PCell, e.g. first cell 11, is not running. Thus, if the PCell TA Timer has expired before a RA procedure is completed the user equipment 10 will not start the SCell TA timer, resulting in that the SCell TA Timer will not run while the PCell TA Timer is not running.

With embodiments herein, the scheduling of the SCell can be done in downlink by the eNB without problems since the PCell is known to be in sync. Also, the workload of both the radio base station 12 and the user equipment 10 will be reduced if the SCell TA timers are prevented from starting according to embodiments herein.

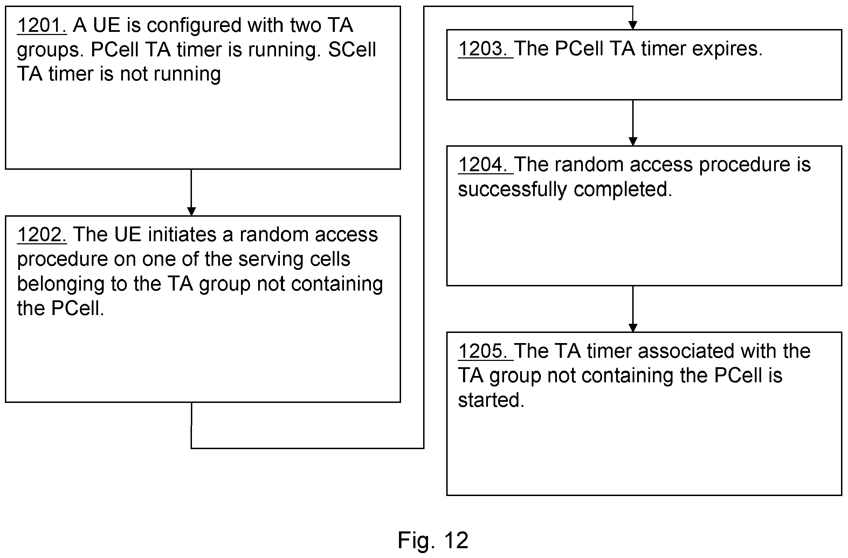

As part of embodiments herein a problem has been identified, according to the current LTE Rel-11 specification a RA procedure can be completed on a serving cell belonging to a TA group not comprising the PCell even though the PCell TA timer is not running as depicted in **Figure 12**. The serving cells in the TA group not comprising the PCell would be considered uplink time aligned by the user equipment even though the PCell TA timer is not running. Currently the LTE Rel-11 specification allows a user equipment to reach a state where one or more TA timers, each associated with a TA group only comprising SCells, hereafter referred to as SCell TA timer, is running or started while the TA timer associated with the TA group comprising the PCell, hereafter referred to as the PCell TA timer, is stopped or not running. This state would cause a number of problems for a radio base station and a user equipment, such as:
a) the complexity of the radio base station would increase because the radio base station must use special logic for the scheduling of downlink traffic since the PUCCH channel is not available; and
b) the radio base station and the user equipment must continue to keep track of the timer state of the SCells even when the PCell is out of sync.

In the first mentioned problem, a), it is necessary for the radio base station and the user equipment to have some special logic for handling the case that the PCell is out of sync and cannot be used, and then when scheduling downlink traffic on the SCell it is necessary to synchronize this scheduling with a corresponding scheduling of an uplink PUSCH message that can include the required HARQ ACK/NACK messages.

In the second mentioned problem, b), if the PCell TA timer is not running no UL traffic should be sent. It would in this situation not be necessary to maintain running TA timers. Thus, if the user equipment would start SCell TA timers when the PCell TA timer is not running, it would still be required that the radio base station and the user equipment keep track of the SCell timing state even though it would not be needed when the PCell TA timer has expired, and thus the possibility for an implementation to put such a user equipment in an inactive state would not be possible. Thus, the flow chart illustrates a scenario when embodiments herein are not applied:
**Action 1201.** A UE is configured with two TA groups. PCell TA timer is running. SCell TA timer is not running.
**Action 1202.**The UE initiates a RA procedure on one of the serving cells belonging to the TA group not containing or comprising the PCell.
**Action 1203.** The PCell TA timer expires.
**Action 1204.** The random access procedure is successfully completed.
**Action 1205.** The TA timer associated with the TA group not containing or comprising the PCell is started.

A problem state may also be reached if an Timing Advance Command Medium Access Control Control Element (TAC MAC CE) updating the PCell TA Timer is decoded wrong and the user equipment 10 then replies with a NACK, however NACK to ACK errors can happen and the radio base station 12 may then believe that the TA Timer of the PCell was restarted while it was not. Any TAC MAC CE addressed to a TA Timer of the SCell may make the user equipment 10 reach a problem state. Embodiments herein aim to avoid the user equipment 10 to reach a state where these problems occur.

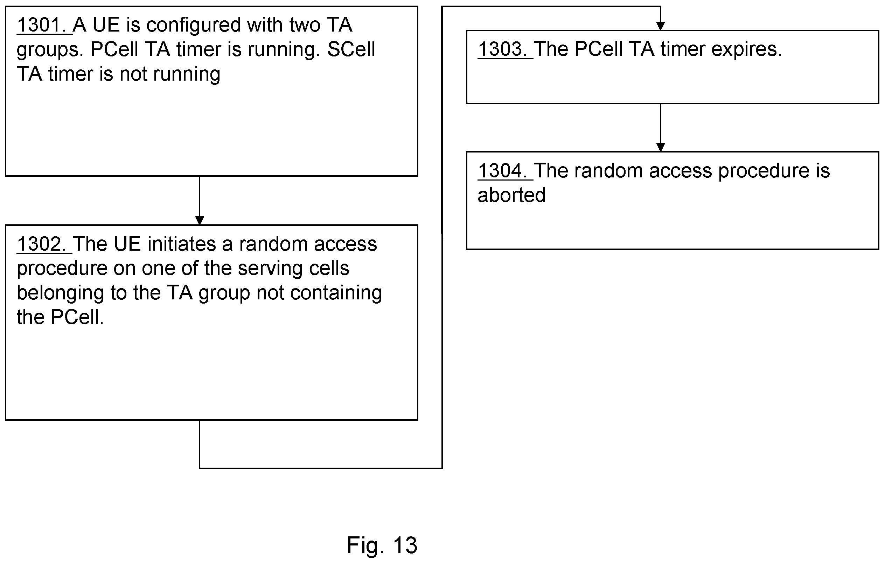

In a first embodiment, illustrated in **Figure 13**, the user equipment 10 will avoid reaching the above mentioned state by aborting any on-going random access procedures on SCells upon expiry of the PCell TA timer. The user equipment 10 would then not successfully complete the random access procedure which would start the SCell TA timer, and hence the problem-state is avoided preventing the SCell TA timer from starting.

**Action 1301.** The user equipment 10 is configured with two TA groups. PCell TA timer is running. SCell TA timer is not running.

**Action 1302.** The user equipment 10 initiates a RA procedure on one of the serving cells, such as e.g. the SCell, belonging to the TA group not containing or comprising the PCell.

**Action 1303.** The PCell TA timer expires.

**Action 1304.** The random access procedure is aborted since the PCell TA timer has expired.

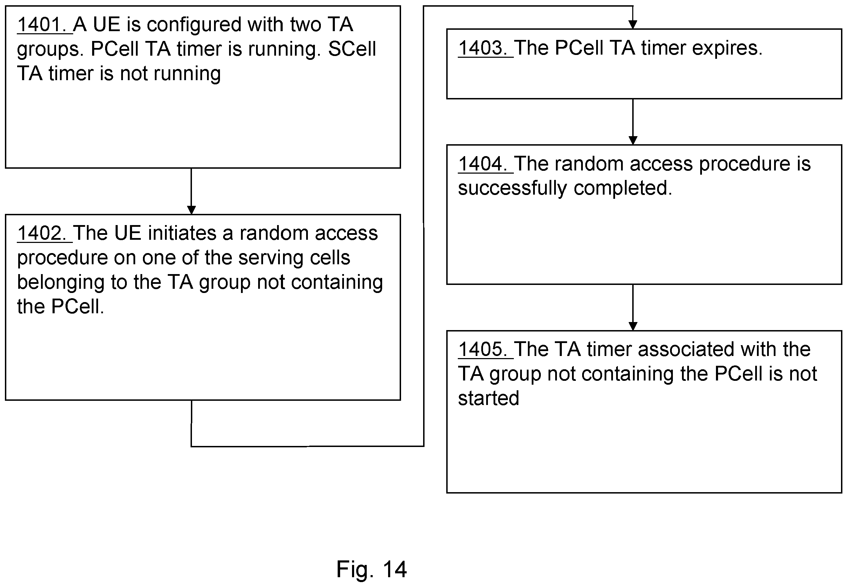

In a second embodiment, illustrated in **Figure 14**, the user equipment 10 refrains from starting an SCell TA timer when the PCell TA timer is not running. Upon completion of a random access procedure on an SCell the TA timer associated with the TA group which the cell belongs to would not be started if the PCell TA timer is not running, and hence the problem-state is avoided.

**Action 1401.** The user equipment 10 is configured with two TA groups. PCell TA timer is running. SCell TA timer is not running.

**Action 1402.** The user equipment 10 initiates a RA procedure on one of the serving cells, such as e.g. the SCell, belonging to the TA group not containing or comprising the PCell.

**Action 1403.** The PCell TA timer expires.

**Action 1404.** The random access procedure on the SCell is successfully completed.

**Action 1405.** The TA timer associated with the TA group comprising the SCell but not containing or comprising the PCell is not started since the PCell TA timer is not running.

The radio base station, e.g. the radio base station 12 or the second radio base station 13, has the possibility to maintain a mirror of the user equipment's TA timers. This means that whenever the user equipment 10 starts the TA timer the radio base station 12 may do the same.

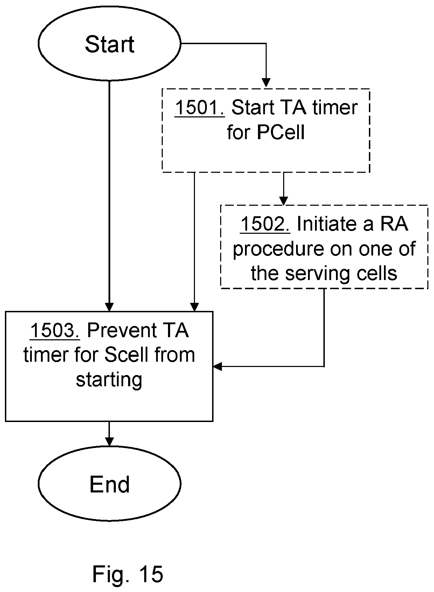

The method actions in the user equipment 10 for controlling a time alignment timer associated with the at least one secondary cell 14 according to some embodiments will now be described with reference to a flowchart depicted in **Figure 15**. The actions do not have to be taken in the order stated below, but may be taken in any suitable order. Actions performed in some embodiments are marked with dashed boxes. The user equipment 10 is configured with the PCell and the at least one SCell. The user equipment 10 may be configured with at least two timing advance groups comprising serving cells, wherein a first timing advance group comprises the PCell and a second timing advance group comprises the at least one SCell. It should also be noted that the first TA group may also comprise SCells, i.e. not only the PCell. The different timing advance groups may have different TA values.

**Action 1501.** The user equipment 10 may start the TA timer associated with the PCell. The PCell TA timer may then expire or stop.

**Action 1502.** The user equipment 10 may initiate a RA procedure on one of the serving cells, such as e.g. the at least one SCell, belonging to the TA group not comprising the PCell.

**Action 1503.** The user equipment 10 prevents the TA timer associated with the at least one SCell from starting if the TA timer associated with the PCell is not running. In some embodiments the user equipment aborts any on-going random access procedure on the at least one SCell and thereby avoids that the TA timer associated with the at least one SCell will be started. The user equipment 10 may prevent the TA timer associated with the at least one SCell from starting by preventing uplink traffic to be sent from the user equipment 10 if the TA timer associated with the PCell is not running.

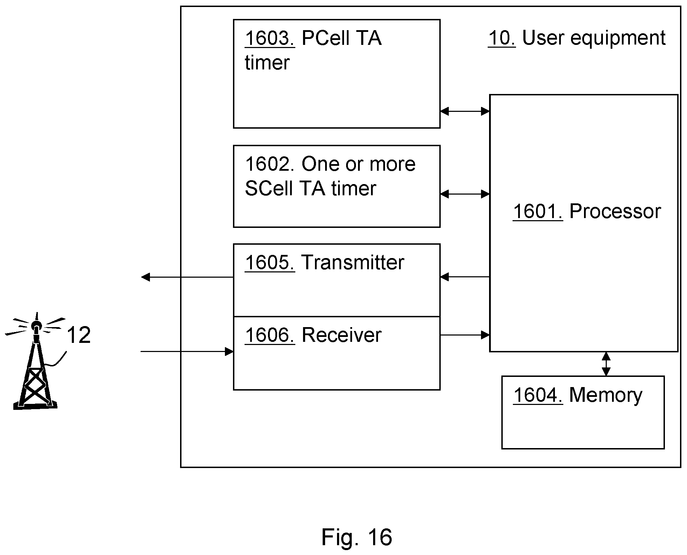

**Figure 16** schematically illustrates the user equipment 10 which is adapted to perform methods according to embodiments herein. The user equipment 10 is configured with the PCell and the at least one SCell. The user equipment 10 may be adapted to be configured with at least two timing advance groups comprising serving cells, wherein a first timing advance group comprises the PCell and a second timing advance group comprises the at least one SCell.

The user equipment 10 comprises **a processor 1601.** The processor 1601 is configured, or may comprise processing circuitry configured, to prevent **a TA timer 1602**, comprised in the user equipment 10, associated with the at least one SCell from starting if **a TA timer 1603**, comprised in the user equipment 10, associated with a PCell is not running according to embodiments herein. The processor 1601 may be configured to abort any on-going random access procedure on the at least one SCell and thereby avoiding that the TA timer 1602 associated with the at least one SCell will be started. The processor 1601 may additionally or alternatively be configured to prevent the TA timer 1602 associated with the at least one SCell from starting by preventing uplink traffic to be sent from the user equipment 10 if the TA timer 1603 associated with the PCell is not running.

The method actions performed by the user equipment 10 are performed by functional elements of the processing circuitry. In some embodiments these functions are carried out by appropriately programmed microprocessors or microcontrollers, alone or in conjunction with other digital hardware, which may include digital signal processors (DSPs), special-purpose digital logic, and the like. Either or both of the microprocessors and digital hardware may be configured to execute program code stored in memory. Again, because the various details and engineering tradeoffs associated with the design of baseband processing circuitry for mobile devices and wireless base stations are well known and are unnecessary to a full understanding of embodiments herein, additional details are not shown here. Program code is stored in **a memory 1604** that may comprise one or several types of memory such as read-only memory (ROM), random-access memory, cache memory, flash memory devices, optical storage devices, etc., and includes program instructions for executing one or more telecommunications and/or data communications protocols, as well as instructions for carrying out one or more of the techniques described herein, in several embodiments. Of course, it will be appreciated that not all of the actions of these techniques are necessarily performed in a single microprocessor or even in a single module. The user equipment 10 further comprises a communication interface, comprising **a transmitter 1605** and **a receiver 1606**, for communicating with respective radio base station 12,13.

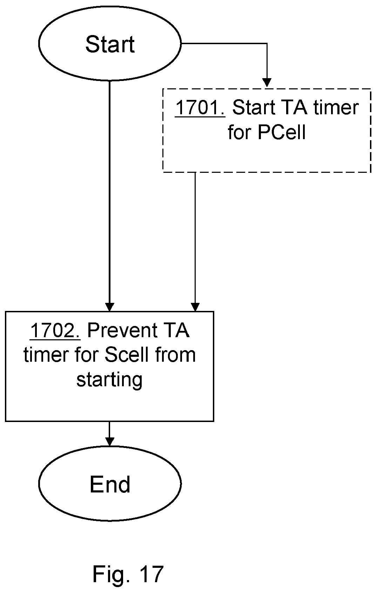

The method actions in the radio base station 12 for controlling a time alignment timer associated with the at least one secondary cell 14 according to some embodiments will now be described with reference to a flowchart depicted in **Figure 17****.** The actions do not have to be taken in the order stated below, but may be taken in any suitable order. Actions performed in some embodiments are marked with dashed boxes. The radio base station 12 serves the user equipment 10, which is configured with the PCell and the at least one SCell that may be served by the radio base station 12.

**Action 1701.** The radio base station 12 may start the TA timer associated with the PCell. The PCell TA timer may then expire.

**Action 1702.** The radio base station 12 prevents the TA timer associated with the at least one SCell from starting if the TA timer associated with the PCell is not running. The radio base station 12 may abort any on-going random access procedure on the at least one SCell and thereby avoiding that the TA timer associated with the at least one SCell will be started. The radio base station 12 may prevent the TA timer associated with the at least one SCell from starting by preventing uplink traffic to be sent from the user equipment 10 if the TA timer associated with the PCell is not running.

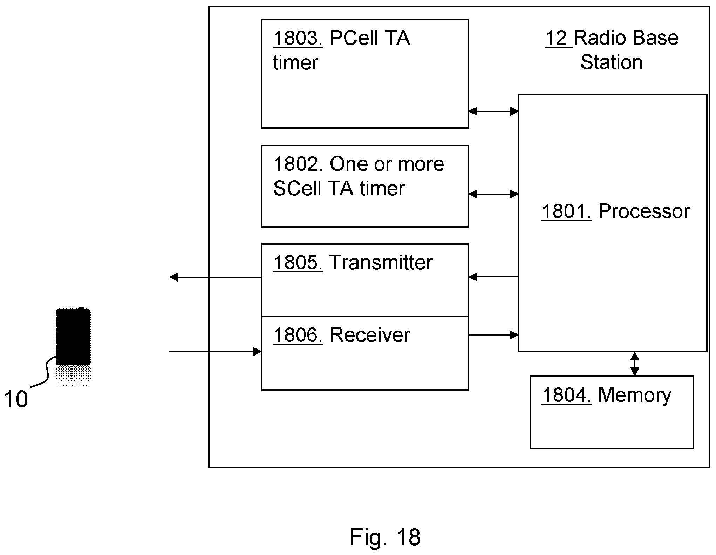

**Figure 18** schematically illustrates the radio base station 12, which is adapted to perform methods according to embodiments herein. The radio base station 12 is adapted for controlling the TA timer associated with at least one SCell. The user equipment 10, served by the radio base station 12, is configured with the PCell, and the at least one SCell. The radio base station 12 may be adapted to configure the user equipment 10 with at least two timing advance groups comprising serving cells. A first timing advance group comprises the PCell and a second timing advance group comprises the at least one SCell.

The radio base station 12 comprises **a processor 1801.** The processor 1801 is configured to prevent **a TA timer 1802**, comprised in the radio base station 12, associated with the at least one SCell from starting if **TA timer 1803**, comprised in the radio base station 12, associated with the PCell is not running. The processor 1801 may be configured to abort any on-going random access procedure on the at least one SCell and thereby avoiding that the TA timer 1802 associated with the at least one SCell will be started. The processor 1801 may additionally or alternatively be configured to prevent the TA timer 1802 associated with the at least one SCell from starting by preventing uplink traffic to be sent from the user equipment 10 if the TA timer 1803 associated with the PCell is not running.

The method actions performed by the radio base station 12 are performed by functional elements of the processor 1801. In some embodiments these functions are carried out by appropriately programmed microprocessors or microcontrollers, alone or in conjunction with other digital hardware, which may include digital signal processors (DSPs), special-purpose digital logic, and the like. Either or both of the microprocessors and digital hardware may be configured to execute program code stored in memory. Again, because the various details and engineering tradeoffs associated with the design of baseband processing circuitry for mobile devices and wireless base stations are well known and are unnecessary to a full understanding of embodiments herein, additional details are not shown here. Program code is stored in **a memory 1804** that may comprise one or several types of memory such as read-only memory (ROM), random-access memory, cache memory, flash memory devices, optical storage devices, etc., and includes program instructions for executing one or more telecommunications and/or data communications protocols, as well as instructions for carrying out one or more of the techniques described herein, in several embodiments. Of course, it will be appreciated that not all of the actions of these techniques are necessarily performed in a single microprocessor or even in a single module. The radio base station 12 further comprises a communication interface, comprising **a transmitter 1805** and **a receiver 1806**, for communicating with the user equipment 10.

The embodiments herein may, of course, be carried out in other ways than those specifically set forth herein without departing from essential characteristics of the embodiments. The present embodiments are to be considered in all respects as illustrative and not restrictive.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments herein being defined by the following claims.

### ABBREVIATIONS

- CC: Component Carrier
- CCE: Control Channel Elements
- EARCFN: E-UTRA Channel Number
- PDCCH: Physical Downlink Control Channel
- RACH: Random Access Control Channel
- RA: Random Access
- RNTI: Radio Network Temporary Identifier(s)
- RLM: Radio Link Monitoring
- RRH: Remote Radio Head
- TA: Timing Advance
- TAC: Timing Advance Command
- TAT: Tim Alignment Timer
- AL: Aggregation Layer
- PCC: Primary component carrier
- PCell: Primary cell
- SCC: Secondary component carrier
- SCell: Secondary cell

## Claims

1. A method performed by a user equipment (10) for controlling a Time Alignment, TA, timer associated with at least one secondary cell, SCell, (14) wherein the user equipment (10) is configured with a primary cell, PCell, (11) and with the at least one SCell (14); the method comprising
- receiving a Timing Advance Command Medium Access Control Control Element, TAC MAC CE, aiming to update a TA timer associated with an SCell 14);
- refraining from restarting the TA timer associated with the SCell (14) for which the TAC MAC CE is received if a TA timer associated with the PCell (11) is not running.

2. A method according to claim 1, wherein the user equipment (10) is configured with at least two timing advance groups comprising serving cells, wherein a first timing advance group comprises the PCell (11) and a second timing advance group comprises the at least one SCell (14).

3. A user equipment (10) adapted for controlling a time alignment, TA, timer associated with at least one secondary cell, SCell (14), wherein the user equipment (10) is adapted to be configured with a primary cell, PCell (11), and the at least one SCell (14); the user equipment (10) comprising a processor (1601) configured to:
- receive a Timing Advance Command Medium Access Control Control Element, TAC MAC CE, aiming to update a TA timer associated with an SCell (14), and
- refrain from starting a TA timer associated with the SCell (14) for which the TAC MAC CE is received if a TA timer associated with the PCell (11) is not running.

4. A user equipment (10) according to claim 3, wherein the user equipment (10) is adapted to be configured with at least two timing advance groups comprising serving cells, wherein a first timing advance group comprises the PCell (11) and a second timing advance group comprises the at least one SCell (14).

5. A method performed by a radio base station (12) for controlling a time alignment, TA, timer associated with at least one secondary cell, SCell (14), wherein a user equipment (10), served by the radio base station (12), is configured with a primary cell, PCell (11), and the at least one SCell (14); the method comprising
- transmitting, to the user equipment, a Timing Advance Command Medium Access Control Control Element, TAC MAC CE, aiming to update a TA timer associated with an SCell (14);
- preventing (1702) a TA timer associated with the SCell (14) for which the TAC MAC CE is transmitted from restarting if a TA timer associated with the PCell (11) is not running.

6. A radio base station (12) adapted for controlling a time alignment, TA, timer associated with at least one secondary cell, SCell (14), wherein a user equipment (10), served by the radio base station (12), is configured with a primary cell, PCell (11), and the at least one SCell (14); the radio base station (12) comprising a processor (1801) configured to:
- transmit, to the user equipment, a Timing Advance Command Medium Access Control Control Element, TAC MAC CE, aiming to update a TA timer associated with an SCell (14);
- prevent a TA timer associated with the SCell (14) for which the TAC MAC CE is transmitted from restarting if a TA timer associated with the PCell (11) is not running.

## Patentansprüche

1. Verfahren, durchgeführt durch eine Benutzereinrichtung (10), zum Steuern eines Zeitgebers für Zeitangleichung, TA, der mindestens einer Sekundärzelle, SCell, (14) zugeordnet ist, worin die Benutzereinrichtung (10) mit einer Primärzelle, PCell, (11) und mit der mindestens einen SCell (14) konfiguriert ist; wobei das Verfahren umfasst:
- Empfangen eines Zeitsteuerungsvorverlegungsbefehl-Medienzugriffssteuerung-Steuerungselements, TAC MAC CE, das darauf abzielt, einen TA-Zeitgeber zu aktualisieren, der einer SCell (14) zugeordnet ist;
- Unterlassen des Neustartens des der SCell (14) zugeordneten TA-Zeitgebers, für den das TAC MAC CE empfangen wird, wenn ein der PCell (11) zugeordneter TA-Zeitgeber nicht läuft.

2. Verfahren nach Anspruch 1, worin die Benutzereinrichtung (10) mit mindestens zwei Zeitsteuerungsvorverlegungsgruppen konfiguriert ist, die versorgende Zellen umfassen, worin eine erste Zeitsteuerungsvorverlegungsgruppe die PCell (11) umfasst und eine zweite Zeitsteuerungsvorverlegungsgruppe die mindestens eine SCell (14) umfasst.

3. Benutzereinrichtung (10), eingerichtet zum Steuern eines Zeitgebers für Zeitangleichung, TA, der mindestens einer Sekundärzelle, SCell, (14) zugeordnet ist, worin die Benutzereinrichtung (10) dafür eingerichtet ist, mit einer Primärzelle, PCell, (11) und der mindestens einen SCell (14) konfiguriert zu werden; wobei die Benutzereinrichtung (10) einen Prozessor (1601) umfasst, der dafür konfiguriert ist:
- ein Zeitsteuerungsvorverlegungsbefehl-Medienzugriffssteuerung-Steuerungselement, TAC MAC CE, zu empfangen, das darauf abzielt, einen TA-Zeitgeber zu aktualisieren, der einer SCell (14) zugeordnet ist, und
- das Starten eines der SCell (14) zugeordneten TA-Zeitgebers, für den das TAC MAC CE empfangen wird, zu unterlassen, wenn ein der PCell (11) zugeordneter TA-Zeitgeber nicht läuft.

4. Benutzereinrichtung (10) nach Anspruch 3, worin die Benutzereinrichtung (10) dafür eingerichtet ist, mit mindestens zwei Zeitsteuerungsvorverlegungsgruppen, die versorgende Zellen umfassen, konfiguriert zu werden, worin eine erste Zeitsteuerungsvorverlegungsgruppe die PCell (11) umfasst und eine zweite Zeitsteuerungsvorverlegungsgruppe die mindestens eine SCell (14) umfasst.

5. Verfahren, durchgeführt durch eine Funkbasisstation (12), zum Steuern eines Zeitgebers für Zeitangleichung, TA, der mindestens einer Sekundärzelle, SCell, (14) zugeordnet ist, worin eine durch die Funkbasisstation (12) versorgte Benutzereinrichtung (10) mit einer Primärzelle, PCell, (11) und der mindestens einen SCell (14) konfiguriert ist; wobei das Verfahren umfasst:
- Übertragen eines Zeitsteuerungsvorverlegungsbefehl-Medienzugriffssteuerung-Steuerungselements, TAC MAC CE, zu der Benutzereinrichtung, das darauf abzielt, einen TA-Zeitgeber zu aktualisieren, der einer SCell (14) zugeordnet ist;
- Verhindern (1702), dass ein der SCell (14) zugeordneter TA-Zeitgeber, für den das TAC MAC CE übertragen wird, neu startet, wenn ein der PCell (11) zugeordneter TA-Zeitgeber nicht läuft.

6. Funkbasisstation (12), eingerichtet zum Steuern eines Zeitgebers für Zeitangleichung, TA, der mindestens einer Sekundärzelle, SCell, (14) zugeordnet ist, worin eine durch die Funkbasisstation (12) versorgte Benutzereinrichtung (10) mit einer Primärzelle, PCell, (11) und der mindestens einen SCell (14) konfiguriert ist; wobei die Funkbasisstation (12) einen Prozessor (1801) umfasst, der dafür konfiguriert ist:
- ein Zeitsteuerungsvorverlegungsbefehl-Medienzugriffssteuerung-Steuerungselement, TAC MAC CE, zu der Benutzereinrichtung zu übertragen, das darauf abzielt, einen TA-Zeitgeber zu aktualisieren, der einer SCell (14) zugeordnet ist;
- zu verhindern, dass ein der SCell (14) zugeordneter TA-Zeitgeber, für den das TAC MAC CE übertragen wird, neu startet, wenn ein der PCell (11) zugeordneter TA-Zeitgeber nicht läuft.

## Revendications

1. Procédé réalisé par un équipement d'utilisateur (10) pour commander une minuterie d'alignement temporel, TA, qui est associée à au moins une cellule secondaire, SCell, (14), dans lequel l'équipement d'utilisateur (10) est configuré avec une cellule primaire, PCell, (11), et avec l'au moins une SCell (14) ; le procédé comprenant :
- la réception d'un élément de contrôle de contrôle d'accès au support de commande d'avancement de temporisation, TAC MAC CE, dont l'objet consiste à mettre à jour une minuterie de TA qui est associée à une SCell (14) ;
- le renoncement au redémarrage de la minuterie de TA qui est associée à la SCell (14) pour laquelle l'élément TAC MAC CE est reçu si une minuterie de TA qui est associée à la PCell (11) n'est pas en train de fonctionner.

2. Procédé selon la revendication 1, dans lequel l'équipement d'utilisateur (10) est configuré avec au moins deux groupes d'avancement de temporisation comprenant des cellules de desserte, dans lequel un premier groupe d'avancement de temporisation comprend la PCell (11) et un deuxième groupe d'avancement de temporisation comprend l'au moins une SCell (14).

3. Equipement d'utilisateur (10) adapté pour commander une minuterie d'alignement temporel, TA, qui est associée à au moins une cellule secondaire, SCell (14), dans lequel l'équipement d'utilisateur (10) est adapté de manière à être configuré avec une cellule primaire, PCell (11), et avec l'au moins une SCell, (14) ; l'équipement d'utilisateur (10) comprenant un processeur (1601) qui est configuré de manière à :
- recevoir un élément de contrôle de contrôle d'accès au support de commande d'avancement de temporisation, TAC MAC CE, dont l'objet consiste à mettre à jour une minuterie de TA qui est associée à une SCell (14) ; et
- renoncer à démarrer une minuterie de TA qui est associée à la SCell (14) pour laquelle l'élément TAC MAC CE est reçu si une minuterie de TA qui est associée à la PCell (11) n'est pas en train de fonctionner.

4. Equipement d'utilisateur (10) selon la revendication 3, dans lequel l'équipement d'utilisateur (10) est adapté de manière à être configuré avec au moins deux groupes d'avancement de temporisation comprenant des cellules de desserte, dans lequel un premier groupe d'avancement de temporisation comprend la PCell (11) et un deuxième groupe d'avancement de temporisation comprend l'au moins une SCell (14).

5. Procédé réalisé par une station de base radio (12) pour commander une minuterie d'alignement temporel, TA, qui est associée à au moins une cellule secondaire, SCell (14), dans lequel un équipement d'utilisateur (10), qui est desservi par la station de base radio (12), est configuré avec une cellule primaire, PCell (11), et avec l'au moins une SCell, (14) ; le procédé comprenant :
- la transmission, à l'équipement d'utilisateur, d'un élément de contrôle de contrôle d'accès au support de commande d'avancement de temporisation, TAC MAC CE, dont l'objet consiste à mettre à jour une minuterie de TA qui est associée à une SCell (14) ;
- empêcher (1702) une minuterie de TA qui est associée à la SCell (14) pour laquelle l'élément TAC MAC CE est transmis de redémarrer si une minuterie de TA qui est associée à la PCell (11) n'est pas en train de fonctionner.

6. Station de base radio (12) adaptée pour commander une minuterie d'alignement temporel, TA, qui est associée à au moins une cellule secondaire, SCell (14), dans laquelle un équipement d'utilisateur (10), qui est desservi par la station de base radio (12), est configuré avec une cellule primaire, PCell (11), et avec l'au moins une SCell, (14) ; la station de base radio (12) comprenant un processeur (1801) qui est configuré de manière à :
- transmettre, à l'équipement d'utilisateur, un élément de contrôle de contrôle d'accès au support de commande d'avancement de temporisation, TAC MAC CE, dont l'objet consiste à mettre à jour une minuterie de TA qui est associée à une SCell (14) ;
- empêcher une minuterie de TA qui est associée à la SCell (14) pour laquelle l'élément TAC MAC CE est transmis de redémarrer si une minuterie de TA qui est associée à la PCell (11) n'est pas en train de fonctionner.
